Europäisches Patentamt

European Patent Office

Office européen des brevets

(11) Veröffentlichungsnummer: **0 258 569**
**A2**

## (12) EUROPÄISCHE PATENTANMELDUNG

(21) Anmeldenummer: 87109603.8

(22) Anmeldetag: 03.07.87

(51) Int. Cl.⁴: **G02B 6/42** , G02B 6/24 ,
G12B 5/00 , G05D 3/00 ,
G02B 7/00

(30) Priorität: 02.08.86 DE 3626254

(43) Veröffentlichungstag der Anmeldung:
**09.03.88 Patentblatt 88/10**

(84) Benannte Vertragsstaaten:
**CH DE FR GB LI**

(71) Anmelder: **BBC Brown Boveri AG**

**CH-5401 Baden(CH)**

(72) Erfinder: **Heimgartner, Dieter**
**Mattächer 18**
**CH-5453 Remetschwil(CH)**
Erfinder: **Kaufmann, Meinolph**
**Moosstrasse 11**
**CH-5406 Rütihof-Baden(CH)**
Erfinder: **Schad,Hanspeter,Dr.**
**Boldistrasse 6**
**CH-5415 Rieden(CH)**
Erfinder: **Widmer,Stefan**
**Haberacher 9**
**CH-5406 Rütihof-Baden(CH)**

(54) **Elektromagnetisches Stellelement.**

(57) Das vorliegende elektromagnetische Stellelement für Positionierungsaufgaben im Submikrometerbereich besteht aus einer in einem hohlzylinderförmigen Permanentmagneten (2) koaxial angeordneten Kombination aus Spulenkörper (3) und
Spulenwicklung (7). Der Spulenkörper (3) ist an beiden Enden durch scheibenförmige Federn (4, 4')
gelagert, die nur eine Auslenkung in axialer Richtung
ermöglichen.

Mit dieser Anordnung ergibt sich ein kompaktes,
einfaches und hochgenaues Stellelement.

FIG.1

## ELEKTROMAGNETISCHES STELLELEMENT

### TECHNISCHES GEBIET

Die Erfindung betrifft ein elektromagnetisches Stellelement wie es insbesondere zur Positionierung von Lichtwellenleitern im Submikrometerbereich verwendet werden kann.

### STAND DER TECHNIK

Mit zunehmender Verbreitung der optischen Datenübertragung mittels Lichtwellenleitern werden auch in zunehmendem Masse Stellelemente benötigt, die eine genaue Positionierung der Lichtwellenleiter an Koppelstellen ermöglichen.

Insbesondere bei den sogenannten Monomode-Lichtwellenleitern, bei denen die Positionierung wegen des sehr dünnen Kernbereichs auf wenige Zehntel Mikrometer genau erfolgen muss, kommt den Stellelementen eine entscheidende Bedeutung zu.

Herkömmliche Stellelemente zur dreidimensionalen Positionierung von Lichtwellenleitern im Bereich von 0,1 μm arbeiten entweder rein mechanisch oder werden durch Elektromotor-oder Piezoantrieb elektrisch angesteuert und geregelt.

Die hochpräzisen mechanischen Stellelemente sind wegen ihrer Grösse und der hohen Anschaffungskosten für die Vielzahl von Koppel-und Spleissverbindungen in einem Lichtwellenleiternetz nicht einsetzbar.

Piezo-Stellelemente andererseits sind zwar klein, haben aber nur einen vergleichsweise kleinen Verstellweg von etwa 10 - 50 μm und benötigen für ihren Betrieb zudem hohe Spannungen bis zu 500 V für einen Stellweg von 25 μm.

### DARSTELLUNG DER ERFINDUNG

Aufgabe der vorliegenden Erfindung ist es nun, ein Stellelement mit hoher Genauigkeit und grossem Stellbereich zu schaffen, das einfach und klein aufgebaut ist und mit geringen Kosten hergestellt werden kann.

Die Aufgabe wird gelöst durch ein elektromagnetisches Stellelement, insbesondere zur Positionierung von Lichtwellenleitern im Submikrometerbereich, welches gekennzeichnet ist durch
-einen hohlzylinderförmigen, in axialer Richtung magnetisierten Permanentmagneten,
-einen sich in axialer Richtung erstreckenden Spulenkörper mit einer darauf angebrachten Spulenwicklung, welche beide koaxial zum Permanentmagneten angeordnet sind, wobei
-Spulenkörper und Permanentmagnet an beiden Enden des Stellelements durch in axialer Richtung wirkende Federn so verbunden sind, dass sie relativ zueinander in axialer Richtung auslenkbar sind.

Besonders vorteilhaft ist es, einen Permanentmagneten aus einer Samarium-Kobalt-Legierung zu verwenden, der symmetrisch zu einer Mittelebene magnetisiert ist, die zugleich auch Mittelebene der Spulenwicklung ist.

Die Federn sind bevorzugt scheibenförmig ausgebildet mit einem Aussendurchmesser, der etwa dem Durchmesser des Permanentmagneten entspricht.

Sie weisen innen ein Loch auf, durch das der Spulenkörper bzw. der Magnetträger mit entsprechenden Schraubstutzen gesteckt und mit den Federn verschraubt ist.

Besonders günstige Eigenschaften ergeben sich mit Federn, deren Federeigenschaften durch von innen nach aussen mäanderförmig verlaufenden Ausnehmungen bewirkt werden.

Gemäss einer bevorzugten Ausführungsform wird ein lineares Verhalten des Stellelements dadurch erreicht, dass die Federn in ihren Federeigenschaften derart ausgestaltet sind, dass sie im Arbeitsbereich des Stellelements gemäss dem Hookeschen Gesetz ausgelenkt werden.

Gemäss einer weiteren bevorzugten Ausführungsform wird eine besonders hohe Nullpunktstabilität und Unempfindlichkeit des Stellelements gegen Erschütterungen und Temperaturschwankungen dadurch erreicht, dass zur Messung der relativen Auslenkung von Spulenkörper und Permanentmagnet ein Wegsensor vorhanden ist, und dass vom Wegsensor abgegebene Signal mittels einer Regelelektronik zur geregelten Ansteuerung der Spulenwicklung verwendet wird.

### KURZE BESCHREIBUNG DER ZEICHNUNGEN

Die Erfindung soll nachfolgend anhand eines Ausführungsbeispiels im Zusammenhang mit der Zeichnung beschrieben und näher erläutert werden. Es zeigen:

Fig. 1 den Schnitt durch ein elektromagnetisches Stellelement gemäss einem ersten bevorzugten Ausführungsbeispiel der Erfindung;

Fig. 2 die Draufsicht auf eine bevorzugte Ausführungsform der Federn mit mäanderförmigen Ausnehmungen;

Fig. 3 den Schnitt durch ein elektromagnetisches Stellelement gemäss einem zweiten bevorzugten Ausführungsbeispiel der Erfindung.

Fig. 4A den Schnitt durch ein elektromagnetisches Stellelement gemäss einem dritten bevorzugten Ausführungsbeispiel der Erfindung mit zusätzlichem Wegsensor;

Fig. 4B die Seitenansicht des in Fig. 4A dargestellten Wegsensors; und

Fig. 5 eine beispielhafte Regelelektronik zur geregelten Ansteuerung der Spulenwicklung des erfindungsgemässen Stellelements.

## WEGE ZUR AUSFÜHRUNG DER ERFINDUNG

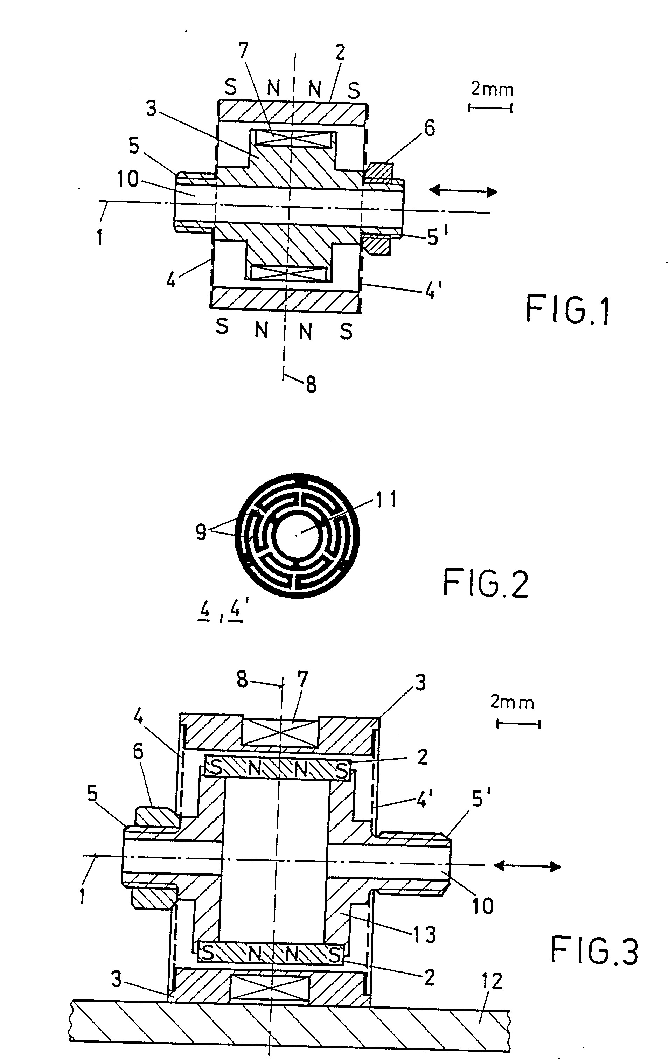

In der Fig. 1 ist ein erstes bevorzugtes Ausführungsbeispiel des erfindungsgemässen Stellelements dargestellt. Das Stellelement der Figur ist im wesentlichen rotationssymmetrisch zu einer Stellelementachse 1.

Die äussere Umhüllung des Stellelements wird gebildet durch einen hohlzylinderförmigen Permanentmagneten 2, der in axialer Richtung, d.h. längs der Stellelementachse 1, magnetisiert ist.

Innerhalb des Permanentmagneten 2 und koaxial zu ihm ist ein Spulenkörper 3 angeordnet, der sich in axialer Richtung erstreckt und an seinen beiden Enden jeweils einen Schraubstutzen 5, 5′ aufweist. Der Spulenkörper 3 kann entweder als Vollkörper ausgeführt sein oder, wie in Fig. 1 angedeutet, mit einer Innenbohrung 10, die beispielsweise zur Aufnahme eines nicht gezeigten Betätigungselements bestimmt sein kann, welches das Stellelement mit der zu verstellenden Vorrichtung verbindet. Der Spulenkörper 3 trägt auf seiner Aussenseite in einer dafür vorgesehenen Nut eine Spulenwicklung 7, die ebenfalls koaxial zum Permanentmagneten 2 angeordnet ist.

Die Schraubstutzen 5, 5′ enden bündig mit den Aussenkanten des Permanentmagneten 2. Der Spulenkörper 3 steckt mit den Schraubstutzen 5, 5′ in entsprechenden Löchern zweier - scheibenförmiger Federn 4, 4′, die mit ihrem Aussenrand an den Aussenkanten des Permanentmagneten 2 befestigt, z.B. verklebt, sind, und den Spulenkörper 2 so federnd lagern, dass er nur in axialer Richtung ausgelenkt werden kann.

Die Befestigung des Spulenkörpers 3 an den Federn 4, 4′ erfolgt bevorzugt über Befestigungsmuttern 6, welche auf die Schraubstutzen 5, 5′ aufgeschraubt werden, und von denen in Fig. 1 nur eine dargestellt ist. Die Schraubstutzen 5, 5′ können im übrigen auch zur Befestigung des bereits erwähnten Betätigungselements verwendet werden. Genausogut ist es aber auch möglich, eine Befestigung des Spulenkörpers 3 an den Federn 4, 4′ ganz ohne Schraubstutzen vorzusehen.

Der Permanentmagnet 2 besteht bevorzugt aus einer magnetisch besonders günstigen Seltene-Erde-Legierung, z.B. einer Samarium-Kobalt-Legierung, die trotz der Kleinheit des Stellelements hohe Stellkräfte ermöglicht. Er ist im Beispiel der Fig. 1 symmetrisch zu einer Mittelebene 8 magnetisiert, wobei die Nordpole N an der Mittelebene 8, die Südpole S an den Aussenkanten liegen.

Auch die Spulenwicklung 7 ist symmetrisch zur Mittelebene 8 angebracht. Durch diese Massnahmen wird erreicht, dass das Stellelement durch Umpolen des Stromes durch die Spulenwicklung 7 in beiden Richtungen gleichermassen arbeiten kann, wie durch den Doppelpfeil in Fig. 1 angedeutet ist.

Für die Lagerung des Spulenkörpers 3 werden bevorzugt scheibenförmige Federn 4, 4′ eingesetzt, die in der Draufsicht die in Fig. 2 wiedergegebene Gestaltung haben.

Vom inneren Loch 11 nach aussen hin erstrecken sich in der Federscheibe mäanderförmig verlaufende Ausnehmungen 9, die z.B. ausgestanzt, besser jedoch photolithographisch mit hoher Präzision geätzt (sog. "chemical milling") sein können, und die der Scheibe die geeigneten Federeigenschaften verleihen. Geometrie und Material der Federn 4, 4′ sind vorzugsweise so gewählt, dass die Federn 4, 4′ im Arbeitsbereich des Stellelements linear gemäss dem Hookeschen Gesetz ausgelenkt werden.

Durch die Federlagerung wird eine hysteresefreie, rein axiale Bewegung des Spulenkörpers 3 gegenüber dem Permanentmagenten 2 ermöglicht. Wird dann die Spulenwicklung 7 über in Fig. 1 nicht gezeigte, flexible Zuleitungen erregt, so wirkt im weitgehend homogenen Magnetfeld eine stromproportionale Kraft auf die Spulenwicklung 7 und damit den Spulenkörper 3. Diese Kraft wird im linearen Spannungs-Dehnungs-Bereich der Federn 4, 4′ in eine stromproportionale Wegverschiebung umgewandetl, die je nach Stromrichtung positiv oder negativ sein kann.

Ein zweites bevorzugtes Ausführungsbeispiel eines erfindungsgemässen Stellelements ist in der Fig 3 im Schnitt wiedergegeben, wobei für gleiche Teile die gleichen Bezugszeichen verwendet worden sind wie in Fig. 1.

Im Ausführungsbeispiel der Fig. 3 sind die Rollen von Spulenkörper 3 bzw. Spulenwicklung 7 und dem Permanentmagneten 2 vertauscht: Der Permanentmagnet 2 ist auf einem Magnetträger 13, der dem Spulenkörper 3 aus Fig. 1 ähnelt, im Inneren des Spulenkörpers 3 angeordnet und durch die Federn 4, 4′ in axialer Richtung beweglich gelagert.

Bei dieser Anordnung ergibt sich der Vorteil, dass die Spulenwicklung 7 vom Platz her nicht eingeschränkt ist und dass für die Stromzuführung keine flexiblen Leitungen verwendet werden müssen, da die Spulenwicklung stationär ist.

Zusätzlich ist in Fig. 3 noch eine Halterung 10 angedeutet, die das Stellelement trägt.

Mit einem Stellelement gemäss Fig. 1 bzs. 3, welches die dort durch den 2 mm-Balken angedeuteten Abmessungen aufweist, lassen sich Verschiebungen von ± 300 $\mu$m realisieren, wobei das Auflösungsvermögen besser als 0,01 $\mu$m ist.

Nicht erwähnt bei den bisherigen Erläuterungen der Erfindung wurde der Einfluss von äusseren Einwirkungen und zum Teil auch inneren Fehlerquellen auf die Positioniergenauigkeit.

Die Positioniergenauigkeit von Submikron-Stellelementen der in Fig. 1 und 3 dargestellten einfachen Art ist relativ stark von der Temperatur, aber auch von der Elastizität der verwendeten Federn 4, 4' abhängig. Die Positionierung ist ausserdem empfindlich gegen Erschütterungen und zeigt in der Praxis eine mechanische Drift.

Die Eliminierung dieser Fehlerquellen lässt sich nun durch eine geeignete elektronische Regelung erreichen. Zu diesem Zweck wird das elektromagnetische Stellelement, wie es bisher anhand der Beispiele aus Fig. 1 und 3 beschrieben worden ist, mechanisch mit einem Wegsensor gekoppelt, dessen Signal über eine geeignete Regelelektronik zur Ansteuerung der Spulenwicklung verwendet wird.

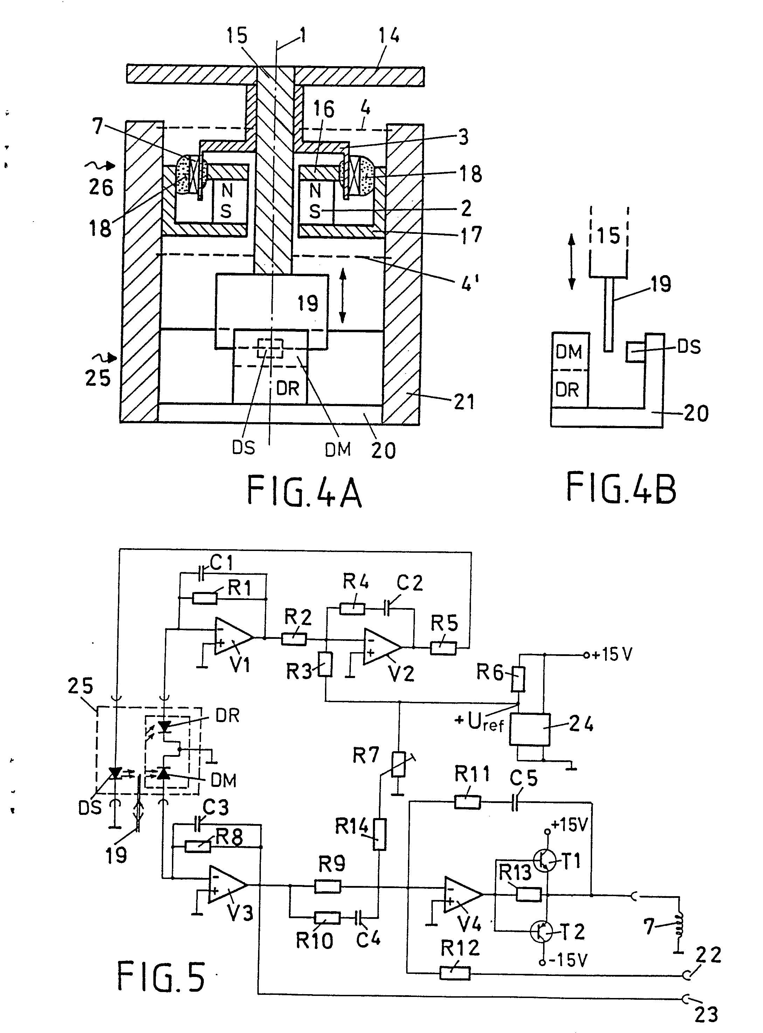

Ein bevorzugtes Ausführungsbeispiel für ein solches geregeltes Submikron-Positioniersystem, welches zugleich ein drittes Ausführungsbeispiel für das erfindungsgemässe Stellelement umfasst, ist in der Fig. 4A dargestellt.

Das Positioniersystem der Fig. 4A besteht im wesentlichen aus einem Stellelement 26 (oberer Teil) und einem damit mechanisch gekoppelten Wegsensor 25 (unterer Teil).

Beide Teile sind in einem hohlzylindrischen Gehäuse 21 untergebracht.

Das Stellelement 26 umfasst ein magnetisches Topfsystem, welches aus dem Permanentmagneten 2, einem oberen Topfelement 16 und einem unteren Topfelement 17 besteht. Zwischen beiden Topfelementen 16 und 17 besteht ein konzentrisch zur Stellelementachse angeordneter Luftspalt.

Innerhalb dieses Luftspalts taucht die Spulenwicklung 7, von dem Spulenkörper 3 getragen, in das magnetische Topfsystem ein. Zur Dämpfung von mechanischen Resonanzen ist der Luftspalt des magnetischen Topfsystems vorzugsweise mit einem hochviskosen Ferrofluid 18 gefüllt, wie es z.B. bei Lautsprechersystemen Verwendung findet.

Der Spulenkörper 3 sitzt fest auf einer zylindrischen Betätigungsstange 15, die freibeweglich durch das Innere des hohlzylindrischen Permanentmagneten 2 hindurchgeführt ist, und auf beiden Seiten des Topfsystems über die Federn 4, 4' mit dem Gehäuse 21 federnd verbunden ist. Auf dem aus dem Gehäuse 21 ragenden Teil der Betätigungsstange 15 ist ein Probenteller 14 angebracht, auf dem eine zu positionierende Probe fixiert werden kann.

Im unteren Teil des Gehäuses 21 steht die Betätigungsstange 15 in Verbindung mit dem optischen Wegsensor 25, welcher eine Messblende 19, eine Sendediode DS (Infrarot-LED), eine Messdiode (DM), eine Referenzdiode DR und einen Sensorträger 20 umfasst.

Die Messblende 19 ist starr mit der Betätigungsstange 15 verbunden. Messdiode DM und Referenzdiode DR sind in Verschiebungsrichtung des Stellelements nebeneinander angeordnet. Ihnen gegenüber, und teilweise durch die Messblende 19 abgeschattet, liegt die Sendediode DS. Alle Dioden DS, DM und DR sind auf einem Sensorträger starr montiert und über ihn mit dem Gehäuse 21 verbunden.

Zur Verdeutlichung sind die wesentlichen Teile des Wegsensors 25 in Fig. 4B noch einmal in Seitenansicht dargestellt. Die Sendedoiode DS ist auf gleicher Höhe mit der empfangenden Messdiode DM angebracht. Die Messblende 19 reicht bei Ruhestellung des Stellelements 26 gerade soweit in den gebildeten Zwischenraum hinein, dass die Messdiode DM gegenüber der Sendediode DS etwa halb abgedeckt ist. Die zur Regelung der Emission der Sendediode DS verwendete Referenzdiode DR empfängt dagegen bei jeder Blendenstellung die volle Lichtintensität der Sendediode DS.

Der solcherart aufgebaute Wegsensor 25 gibt nun in Abhängigkeit von der Stellung der Messblende 19 und damit in Abhängigkeit von der Position des Stellelements 26 ein analoges Ausgangssignal ab, das verstärkt und zur Regelung des Stellelements verwendet werden kann.

Eine beispielhafte Regelelektronik, die sich in der Praxis bewährt hat, ist im Schaltbild in Fig. 5 wiedergegeben.

Eingangsseitig ist die Regelelektronik mit dem Wegsensor 25 und seinen Dioden DS, DM und DR verbunden. Zwei Operationsverstärker V1 und V2 und deren Beschaltung mit den Widerständen R1, ..., R5 und Kondensatoren C1, C2 bilden zusammen mit der Referenzdiode DR und der Sendediode DS einen PI-Regelkreis, welcher sowohl den Temperaturgang der Sendediode kompensiert als auch den Temperaturgang der Dioden DM und DR, welche vorzugsweise als Photodiodensegmente auf einem gemeinsamen Siliziumsubstrat ausgebildet sind (z.B. in Form des Dioden-Typs BPX 48), in optimaler Weise ausgleicht.

Am Ausgang eines weiteren Operationsverstärkers V3 (mit der Beschaltung durch Widerstand R8 und Kondensator C3) liegt eine der Messblendenposition proportionale, verstärkte Analogspannung an, welche für die nachfolgende Regelung den Istwert bildet.

Dieser Istwert wird im nachgeschalteten PID-Regler (Operationsverstärker V4, Widerstände R9, ..., R13, Kondensator C4) mit einem an einem Sollwerteingang 22 anstehenden analogen Sollwert verglichen.

An den Emittern der Kleinleistungstransformatoren T1, T2 stehen dann 1 - 2 Watt als Stellgrösse für die angeschlossene Spulenwicklung 7 zur Verfügung. Das im Operationsverstärker V3 verstärkte Analogsignal kann darüber hinaus am Ausgang 23 zu Registrierzwecken abgenommen werden.

Eine hohe Genauigkeit der Regelelektronik wird durch Einsatz eines Referenzelements 24 (zusammen mit dem Widerstand R6) erreicht (z.B. vom Typ LM 399), welches eine stabile Referenzspannung $U_{ref}$ abgibt, die als Bezugsspannung sowohl für den Operationsverstärker V2 als auch für die Einstellung der Nullposition (über die Widerstände R7, R14) verwendet wird.

Die Operationsverstärker V1, ..., V4 können z.B. in einem einzigen, preisgünstigen 4-fachen OP-AMP vom Typ LM 324 oder LM 347 integriert sein. Darüber hinaus sind alle in der Regelelektronik verwendeten Komponenten als sogenannte SMDs (Surface Mounted Devices) erhältlich, so dass die gesamte Schaltung auf wenigen cm² Fläche aufgebaut und direkt in das Gehäuse 21 des Positioniersystems eingebaut werden kann.

Mit einem System gemäss Fig. 4A, B und Fig. 5 konnten folgende Daten erreicht werden:

Stellung: ± 200 μm
Linearität: besser 1 °/oo
Auflösung: < 50 nm
max. Auflagegewicht: ≈70 gr (bei 1 W Spulenleistung)
Speisung: ± 15 V DC; ≈ 100 mW Dauerleistung

Insgesamt steht also mit der Erfindung ein Stellelement zur Verfügung, das klein, einfach und preiswert ist, elektrisch betätigt werden kann und einen grossen Arbeitsbereich bei gleichzeitig hoher Auflösung besitzt.

**Ansprüche**

1. Elektromagnetisches Stellelement, insbesondere zur Positionierung von Lichtwellenleitern im Submikrometerbereich, gekennzeichnet durch

(a) einen hohlzylinderförmigen, in axialer Richtung magnetisierten Permanentmagneten (2),

(b) einen sich in axialer Richtung erstreckenden Spulenkörper (3) mit einer darauf angebrachten Spulenwicklung (7), welche beide koaxial zum Permanentmagneten (2) angeordnet sind, wobei

(c) Spulenkörper (3) und Permanentmagnet (2) an beiden Enden des Stellelements durch in axialer Richtung wirkende Federn (4, 4') so verbunden sind, dass sie relativ zueinander in axialer Richtung auslenkbar sind.

2. Elektromagnetisches Stellelement nach Anspruch 1, dadurch gekennzeichnet, dass die Federn (4, 4') scheibenförmig ausgebildet sind und innen jeweils ein Loch (11) aufweisen.

3. Elektromagnetisches Stellelement nach Anspruch 2, dadurch gekennzeichnet, dass

(a) Spulenkörper (3) und Spulenwicklung (7) im Inneren des Permanentmagneten (2) angeordnet sind,

(b) die Federn (4, 4') mit ihrem Aussenrand jeweils am Permanentmagneten (2) befestigt sind, und

(c) der Spulenkörper (3) mit entsprechenden Schraubstutzen (5, 5') durch die Löcher (11) der Federn (4, 4') gesteckt und mit den Federn (4, 4') verschraubt ist.

4. Elektromagnetisches Stellelement nach Anspruch 2, dadurch gekennzeichnet, dass

(a) der Permanentmagnet (2) im Inneren des Spulenkörpers (3) angeordnet ist,

(b) die Federn (4, 4') mit ihrem Aussenrand jeweils am Spulenkörper (3) befestigt sind,

(c) der Permanentmagnet (2) auf einem Magnetträger (13) angeordnet ist, und

(d) der Magnetträger (13) mit entsprechenden Schraubstutzen (5, 5') durch die Löcher (11) der Federn (4, 4') gesteckt und mit den Federn (4, 4') verschraubt ist.

5. Elektromagnetisches Stellelement nach einem der Ansprüche 3 oder 4, dadurch gekennzeichnet, dass der Permanentmagnet (2) symmetrisch zu einer senkrecht zur Stellelementachse (1) verlaufenden Mittelebene (8) magnetisiert ist, und die Spulenwicklung (7) zugleich symmetrisch zu dieser Mittelebene (8) angeordnet ist.

6. Elektromagnetisches Stellelement nach Anspruch 5, dadurch gekennzeichnet, dass der Permanentmagnet aus einer Samarium-Kobalt-Legierung besteht.

7. Elektromagnetisches Stellelement nach Anspruch 2, dadurch gekennzeichnet, dass die Federn (4, 4') mit von innen nach aussen mäanderförmig verlaufenden Ausnehmungen (9) versehen sind, welche die Federeigenschaften bewirken, und in ihren Federeigenschaften derart ausgestaltet sind, dass die Federn (4, 4') im Arbeitsbereich des Stellelements gemäss dem Hookeschen Gesetz ausgelenkt werden.

8. Elektromagnetisches Stellelement nach Anspruch 2, dadurch gekennzeichnet, dass

(a) der Permanentmagnet (2) zusammen mit einem oberen Topfelement (16) und einem unteren Topfelement (17) ein konzentrisches magnetisches Topfsystem mit einem konzentrischen Luftspalt bildet,

(b) der Spulenkörper (3) mit der darauf angebrachten Spulenwicklung (7) innerhalb des Luftspaltes in das magnetische Topfsystem eintaucht,

(c) der Spulenkörper (3) auf einer frei beweglich durch den Permanentmagneten (2) verlaufenden Betätigungsstange (15) sitzt,

d) die Betätigungsstange (15) auf beiden Seiten des Permanentmagneten (2) über die Federn (4, 4') mit einem die gesamte Anordnung konzentrisch umgebenden Gehäuse (21) verbunden ist, und

(e) das magnetische Topfsystem zwischen den Federn (4, 4') fest mit dem Gehäuse (21) verbunden ist.

9. Elektromagnetisches Stellelement nach Anspruch 1, dadurch gekennzeichnet, dass

(a) zur Messung der relativen Auslenkung von Spulenkörper (3) und Permanentmagnet (2) ein Wegsensor (25) vorhanden ist, und

(b) das vom Wegsensor (25) abgegebene Signal mittels einer Regelelektronik zur geregelten Ansteuerung der Spulenwicklung (7) verwendet wird.

10. Elektromagnetisches Stellelement nach Anspruch 9, dadurch gekennzeichnet, dass

(a) der Wegsensor (25) ein optoelektronischer Wegsensor ist,

(b) der Wegsensor (25) eine Messblende (19), eine Sendediode (DS), eine Messdiode (DM) und eine Referenzdiode (DR) umfasst,

(c) die Messdiode (DM) und die Referenzdiode (DR) in Auslenkrichtung des Stellelements nebeneinander und gegenüber der Sendediode (DS) angeordnet sind,

(d) die Messblende (19) zwischen der Sendediode (DS) und der Messdiode (DM) verschiebbar angeordnet ist, derart, dass je nach der Grösse der Auslenkung des Stellelements die Messdiode (DM) im Bezug auf die Sendediode mehr oder weniger stark abgeschattet wird, und

(e) jeweils die Messblende (19) und die Dioden (DS, DM, DR) mit dem Stellelement so verbunden sind, dass die Messblende (19) gegenüber den Dioden (DS, DM, DR) die gleiche Relativbewegung ausführt, wie der Spulenkörper (3) gegenüber dem Permanentmagneten.

FIG.1

2mm

FIG.2

4, 4'

8

2mm

FIG.3

FIG.4A

FIG.4B

FIG.5